# EUROPEAN PATENT APPLICATION

(11) **EP 4 312 188 A1**
(43) Date of publication of application: **31.01.2024**
(21) Application number: 22201556.2
(22) Date of filing: 14.10.2022
(51) Int. Cl.: G06T 7/33

(54) **COMBINED OPTICAL AND NON-OPTICAL 3D RECONSTRUCTION**

(30) Priority: 29.07.2022 US 202263393270 P
(71) Applicant: Koninklijke Philips N.V., 5656 AG Eindhoven (NL)
(72) Inventor: HOLTHUIZEN, Ronaldus Frederik Johannes, Eindhoven (NL); BALICKI, Marcin A., Eindhoven (NL)
(74) Representative: Philips Intellectual Property & Standards

(57) **Abstract**

In order to provided imaging of a region of interest of a subject, a device (10) for medical imaging is provided that comprises a data input (12), a data processor (14) and an output interface (16). The data input is configured to provide 3D non-optical image data of a region of interest of a subject, and to provide an optical 3D data set of the region of interest of the subject. The data processor is configured to compute a spatial registration of the optical 3D data set and the 3D non-optical image data, and to combine the 3D data from the optical 3D data set and the 3D data from the 3D non-optical image data based on the computed spatial registration forming a combined 3D volume. The output interface is configured to provide the combined 3D volume.

## Description

### FIELD OF THE INVENTION

The present invention relates to providing images of a region of interest of a subject. The present invention relates in particular to a device for medical imaging, to a medical imaging system and to a method for medical imaging.

### BACKGROUND OF THE INVENTION

Increasingly more surgical procedures are performed minimally invasive. Various solutions have been developed the last couple of years to improve the ease of use and the obtainable accuracy for the surgeons. As an example, (pre-operative) CT or MRI images are provided for planning purposes. Further, different examples for navigation support are provided, such as live X-ray images like fluoroscopy images. US 8553839 B2 describes providing X-ray images and camera images and rendering these into a composite image. Another example is augmented reality, in which a user can align a surgical instrument using a virtual path and the 3D data projected on real-time optical images. However, it has been shown that 3D cone beam CT (CBCT / XperCT) may not cover the full region of interest of the patient in the 3D reconstruction volume due to field of view limitations. This is particularly true for mobile C-arms, but also for fixed C-arms with large patients.

### SUMMARY OF THE INVENTION

There may thus be a need for improved imaging of a region of interest of a subject.

The object of the present invention is solved by the subject-matter of the independent claims; further embodiments are incorporated in the dependent claims. It should be noted that the following described aspects of the invention apply also for the device for medical imaging, for the medical imaging system and for the method for medical imaging.

According to the present invention, a device for medical imaging is provided. The device comprises a data input, a data processor and an output interface. The data input is configured to provide 3D non-optical image data of a region of interest of a subject. The data input is also configured to provide an optical 3D data set of the region of interest of the subject. The data processor is configured to compute a spatial registration of the optical 3D data set and the 3D non-optical image data. The data processor is also configured to combine the 3D data from the optical 3D data set and the 3D data from the 3D non-optical image data based on the computed spatial registration forming a combined 3D volume. The output interface is configured to provide the combined 3D volume.

By generating new 3D data from both the 3D non-optical image data and the optical 3D data, a 3D volume with an increased field of view is made available. This allows to provide key information points, e.g. in navigated spine surgery which are the vertebrae and pedicles and the skin, e.g. for determining the skin incision point of the planned path. Thus, imaging and key visualization needs for spine surgery are addressed. The imaging of the spine is provided for identifying the vertebrae to treat and where to place the screws and rods inside the vertebral body. The new 3D data imaging is suitable for planning the screws to be placed and the imaging of the skin is provided for identifying the incision points of the skin along the planned path of the screws to be placed.

According to an example, the 3D non-optical image data is provided as X-ray image data. Alternatively, the 3D non-optical image data may be provided as MRI image data or image data acquired by means of nuclear medicine functional imaging techniques as positron emission tomography (PET) and single-photon emission computed tomography (SPECT).

According to an example, the 3D non-optical image data is provided as X-ray image data. The data input may be configured to provide a plurality of 2D X-ray images acquired from different directions in relation to the region of interest. The data processor is configured to reconstruct the 3D X-ray image data based on the plurality of 2D X-ray images. Alternatively, the data input may be configured to receive previously reconstructed 3D X-ray image data directly.

According to an example, the data input is configured to provide a plurality of 2D optical camera images. The data processor is configured to reconstruct the optical 3D data set from the plurality of 2D optical camera images. The images of the plurality of 2D optical camera images are acquired from different directions in relation to the region of interest.

According to an example, the 3D non-optical image data covers a first part of the region of interest and the optical 3D data set covers a second part of the region of interest. The first part covers a different part of the region of interest than the second part, although an overlap may exist between the first part and the second part.

According to an example, the data of the optical data set and the data of the 3D non-optical image data comprise origin tags. For the combined 3D volume, the data processor is configured to transfer the origin tags into origin indicators. The output interface is configured to provide at least a part of the origin indicators with the provided 3D volume.

According to the present invention, also a medical imaging system is provided. The system comprises a non-optical imaging arrangement. The system also comprises an optical imaging arrangement with at least one camera. Further, the system comprises a device for medical imaging according to one of the preceding examples. The non-optical imaging arrangement is configured to generate non-optical image data of the region of interest of the subject. The optical imaging arrangement is configured to generate optical data of the region of interest of the subject.

In an option, that can also be omitted, a display arrangement is provided to show the combined 3D volume.

According to an example, the 3D non-optical imaging arrangement is an X-ray imaging arrangement with an X-ray source and an X-ray detector.

According to an example, the at least one camera is movable in relation to the subject to achieve different relative positions for imaging the subject from different directions.

According to another example, the optical imaging arrangement comprises at least two cameras that are fixedly mounted.

In an option, the cameras are fixedly mounted to a camera boom.

In another option, the cameras are fixedly mounted to a housing of the non-optical imaging arrangement

In a further option, the cameras are fixedly mounted to a housing of at least one of the group of the X-ray source, the X-ray detector.

In a further option, the cameras are mounted to different fixed parts of the equipment in an operation room or cathlab.

According to the present invention, also a method for medical imaging is provided. The method comprises the following steps:
- providing 3D non-optical image data of a region of interest of a subject;
- providing an optical 3D data set of the region of interest of the subject;
- computing a spatial registration of the optical 3D data set and the 3D non-optical image data;
- combining the 3D data from the optical 3D data set and the 3D data from the 3D non-optical image data based on the computed spatial registration forming a combined 3D volume; and
- providing the combined 3D volume.

The combining comprises computing a new 3D volume that contains at least information from both the 3D non-optical image data, for example X-ray image data, and the optical 3D data set.

According to an aspect, cone-beam CT reconstruction is combined with optical 3D reconstruction. A combined 3D volume is created utilizing specific calibration and registration techniques to ensure the correct spatial combination of the source volumes. In an example, the source images of the cone-beam CT reconstruction are acquired by a fixed or mobile X-ray C-arm. The optical source images of the optical 3D reconstruction are acquired by optical cameras, e.g. by one, two, three, four or more cameras.

According to an aspect, an enlarged CT like-volume is thus simulated by the newly generated 3D data set.

In an option, the size of the region covered by the X-ray imaging is decreased. Thus, the cone beam CT volume is decreased. The optical data from that region around the cone beam CT-volume then allows the larger volume of the resulting 3D volume. Decreasing the cone beam CT volume without loss of relevant information allows to reduce dose. Decreasing the CT volume also facilitates X-ray imaging in the sense as it is easier to cover a smaller volume with X-ray imaging.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a device for medical imaging, which provides new 3D data based on 3D X-ray image data, as an example for non-optical image data, and optical 3D data.
Fig. 2 shows an example of a medical imaging system with an non-optical imaging arrangement, like an X-ray imaging arrangement, and an optical imaging arrangement.
Fig. 3 shows basic steps of an example of a method for medical imaging.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

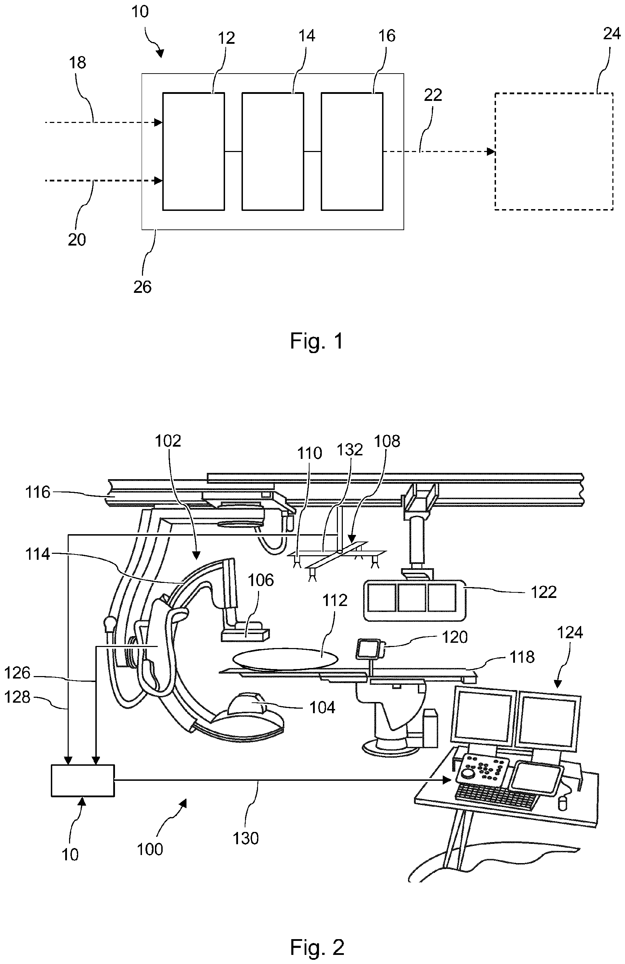

Fig. 1 schematically shows an example of a device 10 for medical imaging. The device 10 comprises a data input 12, a data processor 14 and an output interface 16. The data input 12 is configured to provide 3D non-optical image data of a region of interest of a subject. The data input 12 is also configured to provide an optical 3D data set of the region of interest of the subject. The data processor 14 is configured to compute a spatial registration of the optical 3D data set and the 3D non-optical image data. The data processor 14 is also configured to combine the 3D data from the optical 3D data set and the 3D data from the 3D non-optical image data based on the computed spatial registration forming a combined 3D volume. The output interface 16 is configured to provide the combined 3D volume.

In an example, the 3D non-optical image data is provided as X-ray image data . Alternatively or in addition, image data acquired by means of MRI imaging or nuclear medicine functional imaging techniques such as positron emission tomography and single-photon emission computed tomography may be used.

In an example, shown as an option, the data input 12 is configured to provide 3D X-ray image date as the 3D non-optical image data of the region of interest of the subject. The data processor 14 is configured to compute a spatial registration of the optical 3D data set and the 3D X-ray image data. The data processor 14 is also configured to combine the 3D data from the optical 3D data set and the 3D data from the 3D X-ray image data based on the computed spatial registration forming the combined 3D volume.

It is noted that the following examples and options mention 3D X-ray image data as an example for the 3D non-optical image data. However, this is also meant for 3D MRI image data as another example for the 3D non-optical image data.

A first arrow 18 indicates an input, or data supply, of e.g. the 3D X-ray image data. A second arrow 20 indicates an input, or data supply, of the optical image data, such as the optical 3D data set. A third arrows 22 indicates the provision, or output, of the combined 3D volume. As an option, a display 24 for showing an image of the combined 3D volume is indicated with a dotted-line frame.

A further frame 26 indicates an option, according to which the data input 12, the data processor 14 and the output interface 16 are provided in an integrated manner, such as in a common housing. In a further option, the data input 12, the data processor 14 and the output interface 16 are provided as separate components.

The solution provided herewith enables an easy-to-use integration of surgical navigation and both 2D and 3D X-ray imaging or MRI imaging. As an example, a surgical planned path is made available before or during the operation.

The 3D X-ray image data is provided as first image data. The optical 3D data set is provided as second image data. However, the terms first and second do not necessarily define a temporal order of the provision of the respective image data. In an example, the 3D X-ray image data and the optical 3D data set are provided simultaneously. In a further example, the 3D X-ray image data is provided before the optical 3D data set is provided. In another example, the 3D X-ray image data is provided after the optical 3D data set is provided. In a still further example, the 3D X-ray image data and the optical 3D data set are provided partly overlapping in a temporal manner.

Further, the terms first and second do also not necessarily define a temporal order of the respective image data acquisition or imaging. In an example, the 3D X-ray image data and the optical 3D data set are acquired simultaneously. In a further example, the 3D X-ray image data is acquired before the optical 3D data set is acquired.

In another example, the 3D X-ray image data is acquired after the optical 3D data set is acquired. In a still further example, the 3D X-ray image data and the optical 3D data set are acquired partly overlapping in a temporal manner.

As an example, cone beam CT and optical 3D volumes are combined into a single volume. To ensure that the relative spatial coordinates of the volumes match, registration techniques are used.

As an example, the combining comprises to integrate the first set of voxels and the second set of voxels.

As an example for fields of use, 3D capable mobile C-arm X-ray systems are provided, e.g. 3D mobile C-arm project IGT systems, and optical navigation systems, such as ClarifEye ^{®} IGT-systems surgical navigation, XperGuide needle navigation application and the like.

In an example, the optical source images are acquired by optical cameras mounted to a camera boom (see also Fig. 2) carrying the one or more optical cameras.

In another example, the optical source images are acquired by optical cameras integrated into the housing of the non-optical imaging, like the X-ray source or the X-ray detector.

In an example, the 3D non-optical image data is provided as X-ray image data. The data input 12 is configured to provide a plurality of 2D X-ray images acquired from different directions in relation to the region of interest. The data processor 14 is configured to compute the 3D X-ray image data based on the plurality of 2D X-ray images.

The 2D X-ray images can also be referred to as first images. When referring to the 2D X-ray images as the first images, the 2D optical camera images can be referred to as second images.

The 2D X-ray images comprise data from an area within the subject.

In an example, the 2D X-ray images are provided from around the subject in a range of at least a span of 180° plus fan angle for computed tomography image reconstruction.

In an example, standard cone-beam or XperCT reconstruction is provided.

In an example, the data input 12 is configured to provide a plurality of 2D optical camera images. The data processor 14 is configured to reconstruct the optical 3D data set from the plurality of 2D optical camera images. The images of the plurality of 2D optical camera images are acquired from different directions in relation to the region of interest.

In an example, a plurality of different images from one camera is provided that is moved to a plurality of locations in relation to the subject.

In an example, next to skin images, a method is provided for reconstructing other anatomy, e.g. bony anatomy for open surgery, as well as devices, such as implant holding tools, using the optical volume.

The 2D optical camera images comprise data from a surface of the subject.

In an example, the optical source images of the optical 3D reconstruction are acquired by four optical cameras integrated into the housing of the X-ray detector.

In another example, the optical source images of the optical 3D reconstruction are acquired by four optical cameras supported by a camera boom.

Another option is provided by cameras integrated into the housing of a light, or even integrated into a light.

In an example, the position of the cameras is static.

Because the set of images is limited, in an example, an optical calibration is performed to determine the intrinsic camera parameters, such as lens distortion. The optical calibration is also performed to determine the extrinsic camera parameters, such as the positions and angulation of the cameras with respect to each other. In an example, these parameters are used to optimize the optical 3D reconstruction.

In another example, the position of the cameras is dynamic.

For example, the cameras are integrated into the detector housing. In an example, during a workflow of a CBCT acquisition, the cameras rotate around the patient two times. Once for the test round, and once for acquiring the CBCT source images. During these rotations, optical images of the subject can be acquired from different angles. As an example, CBCT acquisitions are calibrated, e.g. the position of the X-ray detector with respect to the patient is known for each X-ray source image that is acquired. The knowledge of the known camera positions can be used to optimize the optical 3D reconstruction.

In an example, for the optical 3D data set, optical 3D reconstruction is provided.

As an example, the optical 3D reconstruction is based on an algorithm that builds a textured 3D model based on a multitude of optical images.

In an example, for the reconstruction of the optical 3D data set, the data processor 14 is configured to detect and match of optical features, to generate and select features in 3D that have a high confidence based on multiple image combinations, and to generate a 3D mesh.

In an option, the data processor 14 is configured to texture the mesh.

In an example, for the reconstruction of the optical 3D data set, the data processor 14 is configured to align the images based on detected image features and estimating a camera position for each image resulting in a set of camera positions, to generate a point cloud based on the estimated camera positions and the images, to build a polygonal mesh based on the point cloud representing a surface portion of the subject, and, optionally, to texture the mesh.

In an example, estimating the camera positions and intrinsic camera parameters is required in case the system is not pre-calibrated.

For the first stage of the algorithm, the intrinsic and extrinsic parameters as well as the camera positions are provided as input.

The aligning of the images based on the detected image features results in an initial point cloud, also referred to as sparse point cloud.

In an example, the sparse point cloud is used for building the mesh, instead of using the point cloud or in addition to using the point cloud.

The generated point cloud can also be referred to as dense point cloud.

In an example, the 3D non-optical image data, such as the 3D X-ray image data, covers a first part of the region of interest and the optical 3D data set covers a second part of the region of interest. The first part covers a different part of the region of interest than the second part. In an option, the first part is smaller than the second part.

This allows to provide 3D image data of a subject of a region of interest, while only imaging a part with X-ray imaging, meaning radiation dose savings for the subject.

In an example, the optical 3D data set covers a skin portion of the subject and wherein the 3D X-ray image data covers an interior portion of the subject.

In an example, the 3D X-ray image data covers a portion of the subject that is arranged within the outer surface of the subject.

In an example, the 3D X-ray image data does not comprise portions with image data relating to the skin of the subject.

In an example, the 3D X-ray image data is skin-portion-free.

In another example, overlap of the volumes is provided. For example, a part of the 3D X-ray image data contains portions of the skin.

In an example, the 3D non-optical image data, such as the 3D X-ray image data, comprises a first set of voxels. The optical 3D data set comprises a second set of voxels, For the combining, the data processor 14 is configured to combine the first set of voxels and the second set of voxels.

In an example, the data of the optical data set and the data of the 3D non-optical image data, such as the 3D X-ray image data, comprise origin tags. For the combined 3D volume, the data processor 14 is configured to transfer the origin tags into origin indicators. The output interface 16 is configured to provide at least a part of the origin indicators with the provided 3D volume.

The origin indicators provide a differentiation of the respective data source that may be visualized together with the combined 3D volume, for example.

In an example, the indicators are provided as different colors for different data origin, such as synthetic colors.

In an example, as the indicators, color information from the cameras is provided.

In an example, for the area where no CBCT 3D information is available, the optical (grayscale or color values) voxels of the optical volume are added to the CBCT 3D volume. To clarify to the user which voxels originate from which source, different colors can be used to represent the origin indicators for the different voxels, depending on the source. Thus, a visual indication can be added to the combined volume to mark which section is based on CBCT or on optical data.

In an example, the voxel values of the combined volume, origination of the optical volume, are filled in as typical 'skin' and 'tissue' Hounsfield values as CBCT values, where the skin value is used for areas of the optical 3D surface reconstruction and the tissue value is used to fill the area between the skin voxels and the edge of the CBCT reconstruction value.

In an example, the texture of the mesh is used in the 3D surface reconstruction to visualize the optical color of intensity.

Fig. 2 shows an example of a medical imaging system 100. The medical imaging system 100 comprises an X-ray imaging arrangement 102 with an X-ray source 104 and an X-ray detector 106. The medical imaging system 100 also comprises an optical imaging arrangement 108 with at least one camera 110. The medical imaging system 100 further comprises an example of the device 10 for medical imaging according to one of the examples above. The X-ray imaging arrangement 102 is configured to generate X-ray image data of the region of interest of a subject 112. The optical imaging arrangement 108 is configured to generate optical data of the region of interest of the subject 112.

As an option, the X-ray imaging arrangement 102 is provided as a C-arm system with a C-arm 114 movably mounted to a ceiling rail structure 116.

As further options, Fig. 2 shows a subject support 118 with a control and display interface 120. The subject 112 is arranged on the subject support 118.

As an option, a display arrangement 122 is provided and the combined 3D volume is shown on the display arrangement 122. In another example the combined 3D volume is shown on the display interface 120 and/or the console 124.

In Fig. 2, the display arrangement 122 is provided as an arrangement of monitors 122 hanging from a support structure mounted to the ceiling rail structure 116. However, also other display setups are provided. In an example, provided in addition or alternatively, the combined 3D volume is provided via augmented reality devices or virtual reality devices, for example head mounted displays.

A console 124 is indicated in the foreground. The console 124 is providing a monitor setup and control interfaces like a keyboard, mouse, graphic tablet and control knobs. In an example, the console 124 is provided for operating the medical imaging system 100. In an example, the console 124 is used to plan the screw trajectories on the combined 3D volume.

A first connection line 126 indicates a data connection of the non-optical imaging arrangement 102, such as the X-ray imaging arrangement, with the device 10 for medical imaging. A second connection line 128 indicates a data connection of the optical imaging arrangement 108 with the device 10 for medical imaging.

As an option, a third connection line 130 indicates a data connection of the device 10 for medical imaging with the console 124.

In an option, the optical imaging arrangement 108 comprises a boom structure 132 with two crossing beams, which on their ends each support an example of the camera 110. In one option, the boom structure 132 is adjustable, but can be fixed during imaging.

In another option, the boom structure 132 is movable during imaging procedures.

In another option, not further shown, the optical imaging arrangement 108 provides the cameras 110 integrated in a housing of the X-ray detector 106.

In another example, also not further shown, the X-ray imaging arrangement 102 is a mobile X-ray system.

As an example of use, the system is provided for imaged guided therapy (IGT).

In an example, the combined 3D volume is shown live on a screen.

In another example, the combined 3D volume is shown as projection in combination with a live view as augmented reality.

As an example, a puncture point, determined based on the combined 3D volume, is overlaid on a camera image as augmented reality.

In a further example, the combined 3D volume is provided on a virtual screen.

In a further example, the combined 3D volume is projected on a real subject, for example in an augmented reality device, such as a head mounted device.

In an example, for the spatial registration, data of a spatial relation of the non-optical imaging arrangement 102, like the X-ray imaging arrangement, and the optical imaging arrangement 108 is provided.

In an example, the at least one camera 110 is movable in relation to the subject 112 to achieve different relative positions for imaging the subject from different directions.

In another example, a plurality of different images from a plurality of cameras is provided. The cameras 110 may remain fixed in relation to the subject; or may be moved to a plurality of locations in relation to the subject.

In an example, the optical imaging arrangement 108 comprises at least two of the cameras 110 that are fixedly mounted to at least one of the group of a camera boom and a housing. The housing is provided as a housing of at least one of the group of: the X-ray source 104 and the X-ray detector 106.

In an example, four of the cameras 110 are provided on ends of the crossing beams of the boom structure 132.

In another example, not shown, four of the cameras 110 are provided on corners of the housing of the X-ray detector.

In an example, for computing the spatial registration, surgical instruments with markers are provided that are tracked by device tracking. In an example, markers on the patient are provided and used to compensate for patient motion.

In an example, it is provided that a service time calibration is employed where an X-ray and optical visible calibration phantom is used. In an option, an X-ray and optical visible calibration phantom and a separate full optical calibration phantom are used. In an example, these are provided combined into one phantom. For example, X-ray and optical images are acquired from multiple positions of the detector. This calibration produces an optical-to-X-ray transformation so that for any image generated, the relationship of the source images is known with respect to each other. This is true for any 2D optical and X-ray image generated by the system. By keeping correct accounting of the spatial properties of these source images, also the spatial transformation of the 3D reconstructed volumes can be calculated.

In an example, it is provided that no fixed spatial relationship between the X-ray detector and the optical cameras is provided as each camera system can be moved independently. The correct registration can only be calculated by using spatially correlated points of the subject (patient) that can be determined by both measurement systems.

In one example, the hardware provides a first optical camera system having one or more cameras in the X-ray detector housing and a second optical camera system having one or more cameras mounted on a camera boom. By measuring the position of optically visible skin markers by both camera systems, the correct optical registration can be calculated.

In another example, there are no optical cameras in the X-ray detector housing. Skin markers that are designed to be visible both optically and by X-ray are applied to the subject. By measuring the positions of these markers in the CBCT volume and in the optical volume, the correct registration can be calculated.

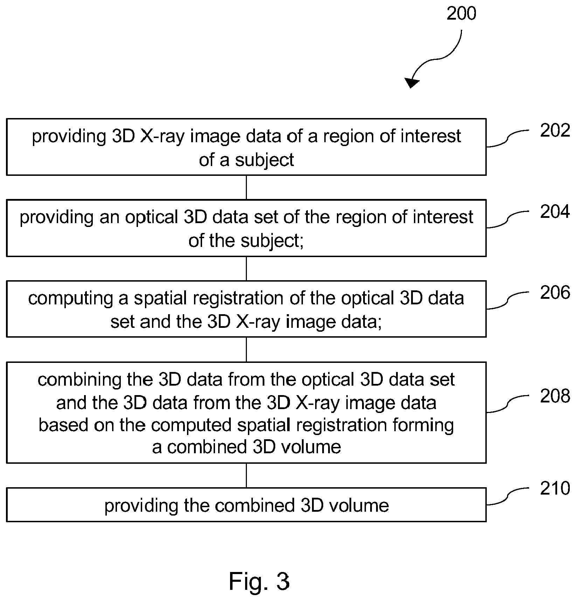

Fig. 3 shows basic steps of an example of a method 200 for medical imaging. The method 200 comprises the following steps: In a first provision step 202, 3D non-optical image data of a region of interest of a subject is provided. In a second provision step 204, an optical 3D data set of the region of interest of the subject is provided. In a computing step 206, a spatial registration of the optical 3D data set and the 3D non-optical image data is computed. In a combining step 208, the 3D data from the optical 3D data set and the 3D data from the 3D non-optical image data are combined based on the computed spatial registration forming a combined 3D volume. In a further provision or supply step 210, the combined 3D volume is provided or supplied.

The first and the second provision step are provided in this order, the reversed order or simultaneously.

The result is one single 3D volume data that comprises the information from both sources.

The combining can also be referred to as merging the 3D data from the optical 3D data set and the 3D data from the 3D non-optical image data in one volume. Further, registration techniques are employed to register the optical and the CBCT volumes.

In an example, registration and combining the optical and the X-ray volumes is provided by physically attaching the X-ray and optical sensors to each other and use a service-based calibration to calculate the X-ray-to-optical transformation.

In another example, markers are provided that are visible optically and on X-ray. The markers are visible in part of the X-ray images used to generate the 3D optical volume. The relationship between the markers visible on the optical images, the markers visible on the 2D X-ray images is known based on the properties of the markers. The relationship between the 2D images and 3D volumes is known based on the respective reconstruction algorithms both for X-ray and optical volume generation. Based on these properties the X-ray to optical transformation is calculated.

In a further example, optical images and X-ray images are acquired at roughly the same time and that a partial overlay of the X-ray and the optical 3D volumes is provided which is used to register the volumes from the two different imagers.

In an example of the method, a plurality of 2D X-ray images acquired from different directions in relation to the region of interest is provided. The 3D X-ray image data is computed based on the plurality of 2D X-ray images.

In an example of the method, a plurality of 2D optical camera images is provided and the optical 3D data set is reconstructed from the plurality of 2D optical camera images. The images of the plurality of 2D optical camera images are acquired from different directions in relation to the region of interest.

In an example of the method, for the reconstruction of the optical 3D data set, it is provided the steps of:
- detecting and matching of optical features;
- generating and selecting features in 3D that have a high confidence based on multiple image combinations; and
- generating a 3D mesh.

In an option, texturing the mesh is further provided. However, this can also be omitted.

In another example, for the reconstruction of the optical 3D data set, it is provided the steps of: aligning the images based on detected image features and estimating a camera position for each image resulting in a set of camera positions; generating a point cloud based on the estimated camera positions and the images; building a polygonal mesh based on the point cloud representing a surface portion of the subject; and preferably, texturing the mesh.

In an example of the method, the 3D X-ray image data covers a first part of the region of interest and the optical 3D data set covers a second part of the region of interest; wherein the first part covers a different part of the region of interest than the second part.

In an example of the method, the 3D X-ray image data comprises a first set of voxels. The optical 3D data set comprises a second set of voxels. The combining comprises to combine the first set of voxels and the second set of voxels.

In an example of the method, the data of the optical data set and the data of the 3D X-ray image data comprise origin tags. For the combined 3D volume, the origin tags are transferred into origin indicators. Further, the provided 3D volume provides at least a part of the origin indicators.

The term "subject" may also be referred to as individual. The "subject" may further also be referred to as patient, although it is noted that this term does not indicate whether any illness or disease is present with the subject.

In another exemplary embodiment of the present invention, a computer program or a computer program element is provided that is characterized by being adapted to execute the method steps of the method according to one of the preceding embodiments, on an appropriate system.

In an example, a computer program or program element for controlling an apparatus according to one of the examples above is provided, which program or program element, when being executed by a processing unit, is adapted to perform the method steps of one of the method examples above.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an update turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for medical imaging, comprising:
- a data input (12);
- a data processor (14); and
- an output interface (16);
wherein the data input is configured: to provide 3D non-optical image data of a region of interest of a subject; and to provide an optical 3D data set of the region of interest of the subject;
wherein the data processor is configured to: compute a spatial registration of the optical 3D data set and the 3D non-optical image data; and to combine the 3D data from the optical 3D data set and the 3D data from the 3D non-optical image data based on the computed spatial registration forming a combined 3D volume; and
wherein the output interface is configured to provide the combined 3D volume.

2. Device according to claim 1, wherein the 3D non-optical image data is provided as X-ray image data.

3. Device according to claim 2, wherein the data input is configured to provide a plurality of 2D X-ray images acquired from different directions in relation to the region of interest; and
wherein the data processor is configured to compute the 3D X-ray image data based on the plurality of 2D X-ray images.

4. Device according to claim 1, 2 or 3, wherein the data input is configured to provide a plurality of 2D optical camera images;
wherein the data processor is configured to reconstruct the optical 3D data set from the plurality of 2D optical camera images; and
wherein the images of the plurality of 2D optical camera images are acquired from different directions in relation to the region of interest.

5. Device according to one of the preceding claims, wherein, for the reconstruction of the optical 3D data set, the data processor is configured: to detect and to match of optical features; to generate and to select features in 3D that have a high confidence based on multiple image combinations; to generate a 3D mesh; and to texture the mesh.

6. Device according to one of the preceding claims, wherein the 3D non-optical image data covers a first part of the region of interest and the optical 3D data set covers a second part of the region of interest; and
wherein the first part covers a different part of the region of interest than the second part.

7. Device according to one of the preceding claims, wherein the 3D non-optical image data comprises a first set of voxels;
wherein the optical 3D data set comprises a second set of voxels; and
wherein, for the combining, the data processor is configured to combine the first set of voxels and the second set of voxels.

8. Device according to one of the preceding claims, wherein the data of the optical data set and the data of the 3D non-optical image data comprise origin tags;
wherein for the combined 3D volume, the data processor is configured to transfer the origin tags into origin indicators; and
wherein the output interface is configured to provide at least a part of the origin indicators with the provided 3D volume.

9. A medical imaging system (100), comprising:
- a non-optical imaging arrangement (102);
- an optical imaging arrangement (108) with at least one camera (110); and
- a device (10) for medical imaging according to one of the preceding claims;
wherein the non-optical imaging arrangement is configured to generate non-optical image data of the region of interest of the subject; and
wherein a display arrangement (122) is provided to show the combined 3D volume.

10. System according to claim 9, wherein the 3D non-optical imaging arrangement (102) is an X-ray imaging arrangement with an X-ray source (104) and an X-ray detector (106).

11. System according to claim 9 or 10, wherein for the spatial registration, data of a spatial relation of the non-optical imaging arrangement and the optical imaging arrangement is provided.

12. System according to claim 9, 10 or 11, wherein the at least one camera is movable in relation to the subject to achieve different relative positions for imaging the subject from different directions.

13. System according to one of the claims 9 to 12, wherein the optical imaging arrangement comprises at least two cameras that are fixedly mounted to at least one of the group of: a camera boom, a surgical light and a housing of the non-optical imaging arrangement.

14. A method (200) for medical imaging, comprising the following steps:
- providing (202) 3D non-optical image data of a region of interest of a subject;
- providing (204) an optical 3D data set of the region of interest of the subject;
- computing (206) a spatial registration of the optical 3D data set and the 3D non-optical image data;
- combining (208) the 3D data from the optical 3D data set and the 3D data from the 3D non-optical image data based on the computed spatial registration forming a combined 3D volume; and
- providing (210) the combined 3D volume.

15. Computer program comprising instructions which, when the program is executed by a computer, cause the computer to carry out the method of claim 14.
